# EUROPEAN PATENT SPECIFICATION

(11) **EP 3 324 688 B1**
(45) Date of publication and mention of the grant of the patent: **22.07.2020**
(21) Application number: 16306512.1
(22) Date of filing: 18.11.2016
(51) Int. Cl.: H04W 64/00, G01S 19/11, G01S 19/12

(54) **TRANSMISSION OF GNSS SIGNALS USING A RADIO COMMUNICATION NETWORK**
ÜBERTRAGUNG VON GNSS-SIGNALEN UNTER VERWENDUNG EINES FUNKKOMMUNIKATIONSNETZWERKS
TRANSMISSION DE SIGNAUX GNSS AU MOYEN D'UN RÉSEAU DE RADIOCOMMUNICATION

(43) Date of publication of application: 23.05.2018
(73) Proprietor: Centre National d'Etudes Spatiales, 75039 Paris Cedex 01 (FR)
(72) Inventor: RIES, Lionel, 81290 VIVIERS LES MONTAGNES (FR); MARMET, François-Xavier, 31600 MURET (FR)
(74) Representative: Vincent, Célien

(56) References cited:
- EP-A1- 2 363 723
- WO-A1-2005/004527
- US-A1- 2009 225 743
- US-A1- 2016 259 061
- US-B1- 6 236 359
- "3rd Generation Partnership Project; Technical Specification Group Services and System Aspects; Location Services (LCS); Functional description; Stage 2 (Release 1999)", 3GPP STANDARD; 3GPP TS 03.71, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.9.0, 1 June 2004 (2004-06-01), pages 1-110, XP050358144,

## Description

### FIELD OF THE INVENTION

The present invention applies to the field of indoor localization. More specifically, the invention describes a positioning system that can be integrated in a RF wireless radio communication network.

### BACKGROUND PRIOR ART

Positioning techniques, and in particular indoor positioning techniques are subject to an increasing interest, due to the large variety of applications that are concerned. Among these applications are the Location Based Services (LBS), in public places such as malls, stadiums or parking lots, where an indoor positioning system allows providing content that really matches the user's profile. Machine-control is one of these, as for example controlling robots in a warehouse, path finding applications, augmented reality and many others. In order to be relevant, indoor localization must be very precise and accurate.

GNSS (acronym for Global Navigation Satellite Systems) positioning techniques have been used and improved for many years. Two Global Navigation Satellite Systems (GNSS) have been fully deployed for a number of years (the US Global Positioning System (GPS) and the Russian GLONASS) and two more are under deployment (the Chinese Beidou Navigation Satellite System and the European Galileo system). GNSS positioning techniques provide a precise and reliable positioning (in some configurations, less than 1m precision), but need to operate in environments where the receiver is in line of sight with many satellites. To retrieve a full position, velocity and time estimation (PVT), the receiver has to be in line of sight with at least four satellites. The number of satellites in line of sight may be reduced if the number of uncertainties to solve is reduced. For example, a full PVT computation can be calculated with less than four satellites in line of sight when one or more of the variables to solve (the variables being the 3D position and a time information) are provided by other signals or sensors, as for instance high precision clocks, altimeters,....

When the propagation conditions comprise reflections over the environment, as for example in an urban environment, the quality of the GPS localization is deteriorated to an order of tens of meters. Moreover, due to their carrier wavelength, GNSS positioning signals significantly lose power when passing through construction materials, such as roof or walls. For these reasons, and also because of the transmission power level limitations at the satellite level and the high distances separating the satellites from the receivers, relying on GPS signals for localization in indoor environment, where there is no direct visibility between the receiver and the satellites, is almost impossible.

Ad-hoc indoor solutions have been developed in the last few years, in order to provide indoor localization. These techniques mostly rely on the use of signals of opportunity (Wi-Fi, Bluetooth™, cell tower ID, digital TV) to locate an area, combined or not with another information such as signal strength, but they provide poor accuracy. Other techniques rely on the use of inertial sensors, which are well-suited for indoor services, but they are expensive, require accurate and frequent calibration, and give time-dependent results. Specific techniques providing accurate results in a multipath environment, such as Ultra Wide Band, have also been developed. They show the drawback of consuming radio frequency (RF) spectrum, thus are subject to restrictive regulatory measures and add important constraints on the design of the receiver radio frequency chain.

Other indoor solutions are directly derived from the GNSS positioning techniques. For instance, ground transmitters, known as pseudolites, can be positioned at various points of an indoor location, to transmit at least four GNSS-like signals. Other equipment, called repeaters, are configured to acquire a GNSS signal from an antenna located outdoor, amplify and transmit this signal alternately with other repeaters. The receiver gets the position of the antenna from the GNSS signals and its position relatively to the repeaters from an evaluation of the evolution of the pseudo range measurements associated to each satellite between consecutives emissions made by distinct transmitters. There are also known equipment called repealite, that acquire a GNSS signal from an external antenna, amplify and transmit said signal continuously, each repealite further inserting a distinctive delay before retransmitting the signal.

Each of these solutions has its own advantages and drawbacks, but provides accurate results. However, deployment of one of these solutions (pseudolite, repeater or repealite) is very costly, as a large number of dedicated equipment should be installed in indoor locations to transmit the signal. In addition, transmitting from a ground station at a carrier frequency dedicated to the GNSS transmission is subject to major regulation constraints, in order not to disturb the existing GNSS networks signals. If the signal is transmitted in another frequency band, the users have, in order to be compatible, to buy, carry and use equipment specifically dedicated to this purpose. Integration of an additional reception module in a standard receiver, as for example in a smartphone, to be compatible with the GNSS signal transmitted using another frequency is also an issue as it would take some space in the equipment and is power consuming.

Today, urban or semi-urban spaces, including most public areas (malls, airports, theatres, parking lots, etc...), are covered by at least one of multiple wireless RF communications standards. Examples of these communication standards are Wi-Fi networks for internet connections, Bluetooth™ networks, video broadcast standards (for instance DVB-T (ETSI EN 300 744) or DVB-T2 (ETSI EN 302 755)), and mobile networks (2G, 3G, 4G, 5G). Transmitting in frequency bands dedicated to these networks can be free from regulations, or at least subject to lower regulation constraints than transmitting in the GNSS frequency bands.

Still, most of the cell phones available on the market now come equipped with chips dedicated to use these communications standards: smartphones always comprise means to communicate via 2G, 3G, 4G, GPS, Wi-Fi (IEEE 802.11) and Bluetooth™ standards.

There is therefore a need for a solution allowing providing accurate indoor location services with limited costs as based on standardised solutions such as GNSS and already deployed equipments. US 6 236 359 discloses a base station that transmits cellular data and GNSS data. The transmission is done thanks to a combiner (page 15, lines 63-67) that transmits the cellular data and the GNSS data. The GNSS data is transmitted on the same time and frequency than the cellular data. In order to reduce the interferences between the GNSS and the cellular data, the level of the GNSS signal is reduced, see e.g. col. 15, lines 43-37. The separation of the signals is then done by filtering as explained in paragraph 16, line 61 to page 17, line 11.

US 2009/0225743 discloses a system similar to US 6,626,359.

The 3GPP standard TS 03.71 V8.9.0 discloses the transmission of GPS assistance data from a base station to terminals. The GNSS assistance data is transmitted in a cell broadcast channel, i.e. is multiplexed in time and frequency with non-GNSS data.

### SUMMARY OF THE INVENTION

It is an object of the invention to take advantage of transmitters natively conceived to transmit non-GNSS signals and already vastly deployed, to transmit GNSS signals. It is another object of the invention to benefit from the multi standards aspect of the receivers to receive said GNSS signals. The invention further comprises a system infrastructure that allows accurate positioning in indoor environment or in an environment where GNSS signals are highly perturbed, like urban canyons, as it is based on GNSS localisation techniques and concepts, and requires only limited modifications to existing transmitting and receiving equipments. Thus, such a system may be implemented quickly and at a low cost.

To this effect, the invention discloses an access point according to claim 1 for transmitting non-GNSS signals using a wireless RF communication standard, said access point being further configured to transmit GNSS-like signals in at least one communication channel dedicated to the transmission of non-GNSS signals, besides of the non-GNSS signal.

Advantageously, the wireless RF communication standard is selected among the Wi-Fi, Bluetooth™, 3G, 4G and 5G standards.

The GNSS-like signals of the transmitter according to the invention comprise a navigation message modulated by a pseudo-random code, and are transmitted over a carrier frequency that differs from standard GNSS carrier frequencies.

In an embodiment, the access point according to the invention further comprises a calculation circuit for generating GNSS-like signals, and a combiner for combining the GNSS-like signals and the non-GNSS signals into a same signal. In another embodiment, it comprises a calculation circuit for generating a bitstream representative of a GNSS-like signal.

In the access point according to the invention, the GNSS-like signals and non-GNSS signals are multiplexed using one of a time or frequency division multiplexing technique.

According to an embodiment, the access point according to the invention is further configured to transmit said GNSS-like signals when receiving a demand over a non-GNSS network.

According to another embodiment, it is further configured to retrieve a navigation message from a GNSS signal, and to transmit said navigation message to other access points using one among the GNSS-like signals and the non-GNSS signals.

The invention further discloses an access point infrastructure according to claim 7 for implementing a method for determining a position over an area using GNSS-like signals transmitted by at least one non-GNSS access point, the access point infrastructure comprising at least one access point according to the invention, the access point(s) being disposed so that at least one GNSS-like signal can be received at any location of the area.

Advantageously, the access points are synchronized over a common time reference.

The invention also discloses a receiver according to claim 9 configured for receiving GNSS and non-GNSS wireless RF signals, the receiver being further configured to receive at least one GNSS-like signal in a communication channel dedicated to said non-GNSS wireless signal, and to use said GNSS-like signal to determine a position of the receiver relative to a position of the access points.

According to one embodiment of the receiver, its position is determined using at least four of said GNSS-like signals.

According to another embodiment of the receiver, its position is determined using said at least one GNSS-like signal and information retrieved from other equipments, as for instance an accurate clock, or an altimeter.

In an embodiment, the receiver according to the invention comprises a front-end module and a calculation circuit for receiving and processing GNSS signals. It also comprises a front-end module and a calculation circuit for receiving and processing non-GNSS signals. The receiver is configured to receive the at least one GNSS-like signal using the non-GNSS front-end module.

Advantageously, the receiver is configured to process the at least one GNSS-like signal using the GNSS calculation circuit, to calculate pseudo ranges and determine the position of the receiver. Alternatively, the receiver according to the invention comprises a dedicated calculation circuit for calculating pseudo ranges and determining the position from the GNSS-like signals.

The invention further discloses a positioning system, for determining a position from a GNSS-like signal transmitted using a plurality of non-GNSS access points, the positioning system comprising:
- an access point infrastructure according to the invention, and
- at least one receiver according to the invention.

Advantageously, in the positioning system according to the invention, at least one receiver is configured to calculate pseudo range residuals from pseudo ranges measurements acquired from GNSS-like signals and a reference information, and to transmit said pseudo range residuals to a computing server in charge of calculating a delay relative to the access points, and of transmitting said delay using the non-GNSS signal.

The invention also discloses a method according to claim 16 for deploying a positioning system comprising at least one access point configured to transmit non-GNSS signals using a wireless RF communication standard, and at least one receiver configured for receiving GNSS and non-GNSS wireless signals. The method according to the invention comprises:
- a first step of transmitting GNSS-like signals from at least one of said non-GNSS access points in at least one communication channel dedicated to the transmission of non-GNSS signals,
- a second step of receiving said GNSS-like signals by said receiver, in at least one communication channel dedicated to the transmission of said non-GNSS signals, and determine associated pseudo range measurements,
- a third step of using said pseudo range measurements to calculate a position relative to a position of the access points.

### BRIEF DESCRIPTION OF THE DRAWINGS

The invention will be better understood and its various features and advantages will emerge from the following description of a number of exemplary embodiments and its appended figures in which:
- Figure 1a, 1b and 1c briefly describe the way GNSS communication systems operate, according to the prior art;
- Figure 2a represents the overall architecture of a RF transmitter according to prior art, while figures 2b to 2f represent various embodiments of a transmitter according to the invention;
- Figure 3a and 3b represent the overall architecture of a RF receiver according to prior art, while figures 3c to 3f represent various embodiments of a receiver according to the invention;
- Figures 4a to 4d represent various embodiments of a positioning system according to the invention;
- Figure 5 represents a flow chart of a method for transmitting and receiving positioning signals according to the invention.

The examples disclosed in this specification are only illustrative of some embodiments of the invention. The invention in its broader aspects is therefore not limited to the specific details, representative methods, and illustrative examples shown and described.

In the following, a particular attention will be paid to the Wi-Fi Standard operating at the 2.4 GHz frequency, as this standard fits advantageously with the invention, and to GNSS communications at 1.6 GHz, which is the L1 GPS band, but the one skilled in the art of the wireless communications and/or GNSS standards would be able to adapt easily the invention to perform the same way with any other wireless communication standard or carrier frequency.

### DETAILED DESCRIPTION OF THE INVENTION

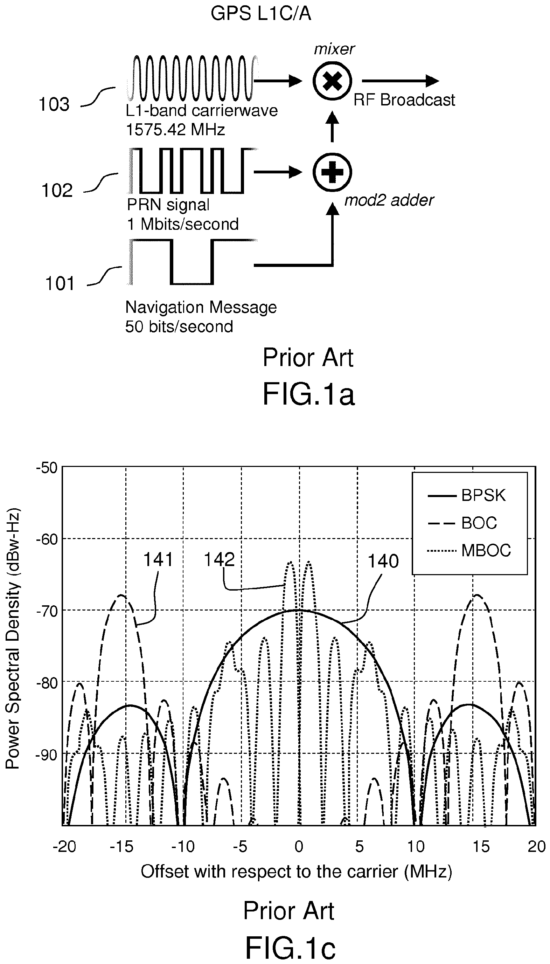

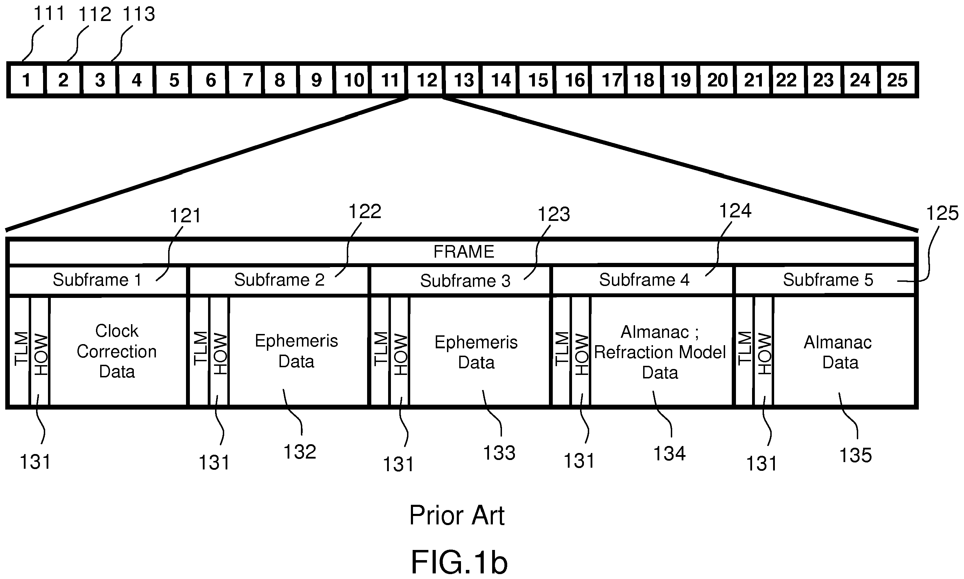

Figure 1a, 1b and 1c briefly describe the way GNSS communication systems operates, according to prior art.

As shown on figure 1a, existing GNSS positioning signals are usually made of a navigation message 101, comprising various information required by the receiver to calculate a pseudo range with the transmitter. The navigation message is further modulated by a PRN (Pseudo Random Noise) code 102 with each satellite using a distinct PRN code, so that the GNSS receivers can isolate the signal originating from one particular satellite. Once spread with the PRN code, the navigation message is modulated and shifted to the carrier frequency 103, before being sent.

Figure 1b illustrates the structure of the navigation message employed in the legacy civilian GPS positioning system (GPS L1C/A). The navigation message is divided in frames (111, 112, 113), which are in turn divided in subframes (121, 122, 123, 124 and 125).

All the subframes contain a precise time information, transmitted in the HOW field (Handover word) 131. Each subframe also contains specific information, as in particular, information called ephemeris (132, 133) and information called almanac (134, 135).

The ephemeris gives the position of the various satellites of the constellation. This information is transmitted by part, and it usually takes about 30 seconds to retrieve the full ephemeris and its associated time data. The almanacs give coarse orbit and status information concerning each satellite of the constellation, in order to allow the receiver to compute coarse Doppler shift, azimuth and elevation for satellites that are not yet in line of sight.

Figure 1c shows examples of power spectral density for modulations used in existing GNSS positioning systems, with respect to the carrier frequency.

Most of the GNSS standards use one of a BPSK (Binary Shift Keying) or a BOC (Binary Offset Carrier) modulation, depending on accuracy and spectral occupation requirements.

It can be observed that the BPSK spectrum 140 has most of its energy contained around the carrier frequency. BPSK modulation is easy to implement, robust and well known, and leads to an auto-correlation function without ambiguities (without correlation function secondary peaks).

Generating a BOC signal is done by modulating the carrier of the signal by an additional subcarrier. As a consequence of this additional modulation, the BOC spectrum 141 is split in two side bands distributed on either side of the nominal carrier frequency, with a frequency separation equal to twice the subcarrier frequency. Each lobe of the signal can be thought of independently as a BPSK spectrum. BOC modulation allows reaching a higher accuracy than BPSK modulation, but uses more bandwidth and leads to a correlation function having ambiguities (secondary peaks). BOC modulation has several variants, among which the sine BOC, cosine BOC, Multiplexed BOC (MBOC), represented by spectrum 142, or the AltBOC (Alternative BOC). The invention applies identically whatever the choice of the modulation and the modulation parameters.

The specifications of a receiver architecture required to calculate a position benefited of many years of research and development, to reach a significant level of maturity. The technological bricks, whether software or hardware, intended to deal with known interferences issues and degradations, like, to a certain extent, impairments mitigation (interference, multipath reflections,...) or to improve the computation speed and/or accuracy of positioning (sensor fusion algorithms, snapshot positioning, ...) are known and efficient. As a consequence, the major remaining issues for using a GNSS positioning system in an indoor environment mostly come from the fact that the signal power level is not necessarily strong enough to cross the walls of the buildings. It has been observed that crossing the walls decreases the precision of the measurement.

The invention proposes to use GNSS-like signals transmitted by non-GNSS transmitters in indoor environments. The GNSS-like signals are standard GNSS signals, meaning that they comprise a navigation message modulated by a pseudorandom code further modulated by a carrier frequency. These GNSS-like messages are transmitted by access points, which are not satellites, at frequencies that differs from the carrier frequencies assigned by GNSS standards, such as the [1164 MHz -1264 MHz], [1215 MHz -1254 MHz], [1260 MHz - 1300 MHz], [1559 MHz - 1610 MHz], [2483.5 MHz - 2500 MHz], and [5010 MHz - 5030 MHz] GNSS frequency bands. However, the waveform parameters of the GNSS-like signals, like for instance the size and content of the navigation message, the length of the PRN code or chip rate, the signal modulation ...), can be modified to better suit the use cases. Notably, modifying the chip rate of the PRN code can be considered to adapt the bandwidth of the signal to the bandwidth handled by the non-GNSS transmitter. Such modifications require using non-standard or highly configurable GNSS receivers.

The low distance between the transmitters and receivers, and the lower constraints in transmitted signal power levels, implies that the signal can be safely received in indoor or perturbed environments, even if some walls have to be crossed. The invention differs from pseudolites as it proposes to use existing RF wireless transmitters to transmit the signal, and thus to benefit from the coverage of these transmitters and from the existing infrastructure/network. Such a use makes sense nowadays, as most of the receivers are no longer dedicated to a specific standard but to various communication standards, and can be adapted to process the GNSS-like signals.

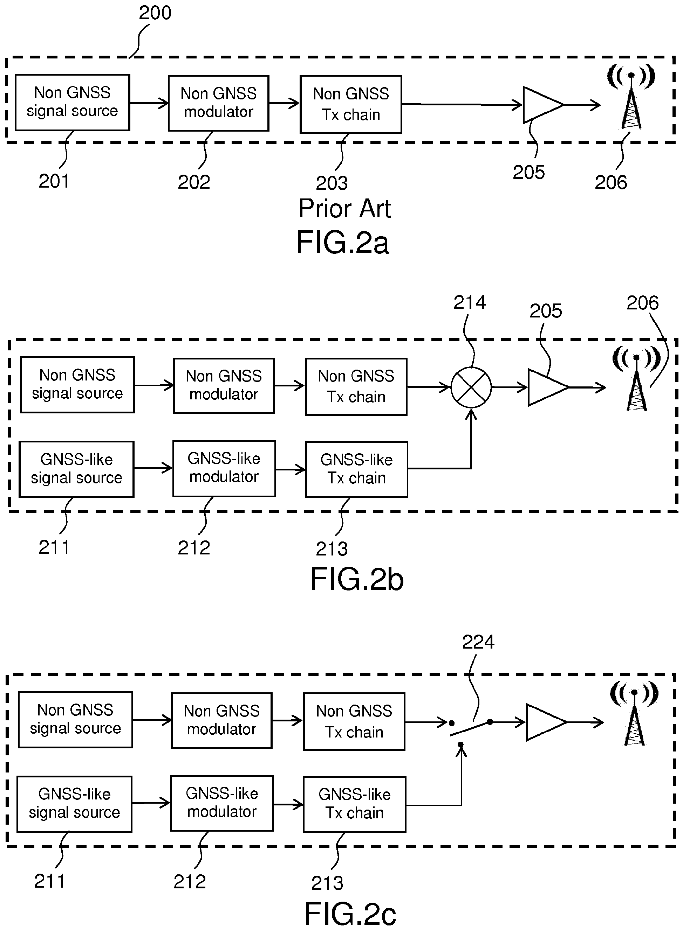

Figure 2a roughly represents the overall architecture of a non-GNSS RF wireless transmitter 200, also called access point, for example a Wi-Fi transmitter. In what follows, the term non-GNSS designates any equipment or communication standard which first use is not to determine accurately a position, and which does not necessarily implies satellites. For instance, a communication standard which first use is to transmit data between users will be considered as a non-GNSS standard, even though part of the standard may comprise ranging measurements. Among non-GNSS standards are for instance Wi-Fi, Bluetooth™, GSM/2G, 3G, 4G/LTE, 5G, DVB-T, DVB-S... while among GNSS equipments are for instance transmitters and receivers of a GPS, Galileo, Beidou, GLONASS network...

Transmitter 200 comprises three main blocs. The first bloc 201 generates a bitstream in the form of data packets containing useful data payload along with information provided by the different communication layers. Generally speaking, these data packets correspond to the output of the MAC layer.

The second bloc 202 is used to modulate the data packets, and to insert in the signal frame information relative to the PHY layer, as for instance headers or pilot sequences for synchronization and channel estimation. The output of this bloc is generally converted from digital to analog, and processed by a third bloc 203, the Tx chain, that is used to filter and transpose the signal over the carrier frequency. The signal is then amplified by amplifier 205 and transmitted using antenna 206.

The two first blocs 201 and 202 are generally implemented in a calculation machine such as a software reprogrammable calculation machine (microprocessor, microcontroller, digital signal processor (DSP), ...) or a dedicated calculation machine (Field Programmable Gate Array (FPGA), Application Specific Integrated Circuit (ASIC), ...). The third bloc 203 is generally analog, but part of this third bloc can be digital.

The invention proposes to perform minimum adjustments to non-GNSS transmitter architectures, such as a Wi-Fi access point, in order to make it capable of transmitting a GNSS-like signal in addition to its regular transmission, using a communication channel of the non-GNSS transmission, the communication channel being, depending on the embodiment, a time or frequency resource of the non-GNSS communication system. According to the invention, A Wi-Fi access point or Bluetooth equipment, for example, may be configured to broadcast non-GNSS information in addition to the broadcasting of an SSID (Service Set Identifier).

Figure 2b represents a first embodiment of a transmitter according to the invention, wherein the GNSS-like signal is combined with the non-GNSS signal at analog RF level.

Three new blocs 211, 212 and 213 are used for generating the GNSS-like bitstream, which comprises the navigation message, adding the PRN spreading code, modulating the signal and performing the filtering and transposition of the signal to the carrier frequency up to the final amplification.

Blocs 211 and 212 might require adding specific hardware to the equipment (i.e. an additional DSP, FPGA or ASIC) to generate the signal, but can also be done by executing a separate source code on the existing hardware platform. In that case, only a firmware update is required, without any modification of the hardware platform. However, to implement the invention, bloc 213 requires adding a radio chain to the transmitter.

The GNSS-like signal and the non-GNSS signals are combined together through the RF combiner 214 so that the resulting signal contains both the GNSS-like signal and the non-GNSS signal. The output of the combiner is amplified and transmitted. A RF combiner is a RF equipment that combines two or multiple signals into one signal.

When appropriate, for example in the context of a Wi-Fi transmitter where the Wi-Fi signal can be transmitted using various frequency channels, the GNSS-like signal can be transmitted using a frequency channel that differs from those used to transmit the non-GNSS signal. However, as the bandwidth of the amplifier 205 and antenna 206 is limited to the non-GNSS standard band, the GNSS-like signal must be transmitted into this non-GNSS band. In that case, the communication channel used to transmit the GNSS-like signal is a frequency band of the non-GNSS resources. This simultaneous transmission of two signals over different carrier frequencies is a frequency division multiplexing (FDM) performed over two signals that are not originally intended to be multiplexed together. This processing can be compared to a FDM (Frequency Division Multiplexing) technique within the non-GNSS band. Advantageously, the GNSS-like signal can be transmitted simultaneously over multiple frequency bands.

Alternatively, the GNSS-like and non-GNSS signal can be combined on the same carrier frequency. As the GNSS-like signal is spread by the PRN sequence, it can be demodulated even when the signal power level is far below the level of noise, the noise comprising here the white noise due to the receiver, and the non-GNSS signal. Thus both signals can advantageously be transmitted simultaneously in the same bandwidth. If the non-GNSS signal is robust to interferences (using for example spreading itself), it will not be impacted by the GNSS-like signal. Otherwise, the GNSS-like signal can be transmitted at a lower power level than the non-GNSS signal, so that the disruption caused to the non-GNSS signal is limited. The relative power level of the signals or the length of the PRN code of the GNSS-like signal must be determined so that both signals can be received. In that case, the communication channel used to transmit the GNSS-like signal is both time intervals and a frequency band of the non-GNSS resources.

Figure 2c represents another embodiment of the invention. This embodiment is close to the one of figure 2b, except that the combiner 214 is replaced by a switch 224, which alternatively selects the signal to transmit from the GNSS-like and the non-GNSS signals. Indeed, GNSS receivers are based on tracking loops, which continuously track a synchronization position. These tracking loops can be made robust to signal interruption and/or positioning techniques using noncontinuous tracking (snapshot positioning). Furthermore, in an indoor environment, the travel speed of the receiver will be very limited, so the tracking loops do not shift quickly, and can operate even if the GNSS-like signal is receiving only during limited fractions of time.

Concerning the non-GNSS signal transmission, communication standard generally comprise error correcting codes, and can handle partial interruptions of the data flow. In addition, most of them are based on IP (Internet Protocol), which contains mechanisms for tracking and retransmitting lost data packets. Thus, interrupting the traffic from time to time will reduce the overall throughput of the network and the average latency, but will not block the transmission of the non-GNSS messages. The switch rate must be determined so that the throughput reduction of the non-GNSS network is acceptable while the localization is made possible, thanks to the GNSS-like signal. In that case, the communication channel used to transmit the GNSS-like signal is made of time intervals of the non-GNSS resources. This alternate transmission of two signals over the same carrier frequency is a time division multiplexing (TDM) performed over two signals that are not originally intended to be multiplexed together. Advantageously, when the non-GNSS system uses a TDMA (Time Division Multiple Access) control access to assign resources to the different users its network, specific timeslots can also be reserved for transmitting the GNSS-like signal. Thus, interrupting the non-GNSS signal during these timeslots does not result in packets losses. For instance, if the non-GNSS system is a 2G network, one or multiple times slots of the GSM frame might be reserved, just like they would be to allocate time resources to a specific user.

If the non-GNSS radio chain 203 can be reconfigured (as for example in a Software Defined Radio), the switch 224 can be operated upstream of the radio chain.

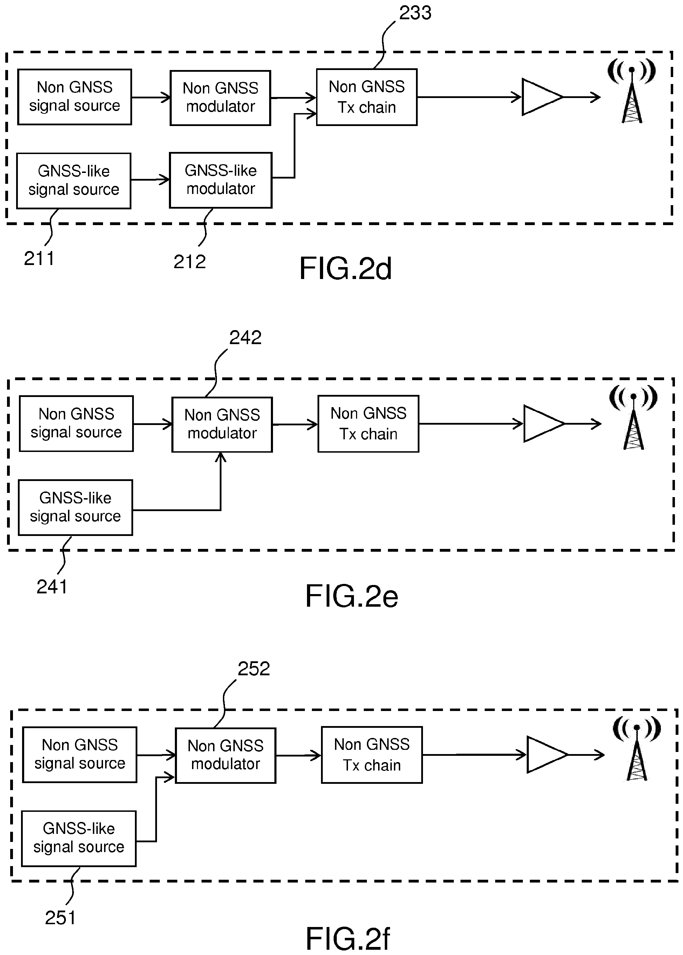

Figure 2d presents another possible embodiment of the invention, close to the embodiment of figure 2c, namely performing a time multiplexing of both signals. In this embodiment, the GNSS-like signal is transmitted using the non-GNSS radio chain 233. The GNSS-like modulator must ensure that the sampling rate of the GNSS-like signal that is transmitted to the radio chain is equal to the sampling rate of the non-GNSS signal. The radio chain 233 must be modified to select alternately from both signal sources, and the switch rate determined so that both systems operate correctly, or so that the GNSS-like signal is selected during reserved timeslots of the non-GNSS frame.

In the embodiment illustrated in figure 2d, the GNSS-like signal is filtered by filters designed to filter the non-GNSS signal. In the GNSS bands, a 20 to 40 MHz wide part of the RF spectrum is generally dedicated to the signal. Thus, the bandwidth of the GNSS-like signal will potentially be reduced to the size of a channel of the non-GNSS standard. However, the useful part of the GNSS signal spectrum is limited to the main lobe(s). In practice, when the GNSS-like signal is transmitted using a BPSK modulation such as the one used for GPS L1C/A, a bandwidth of about 2 MHz is sufficient to receive the signal's main lobe. When the signal is transmitted using a BOC modulation, it is possible to transmit only one lobe of the signal, which leads to a 3dB loss of power level but does not preclude from using the signal. Thus, the invention is compatible with a wide range of standards (for instance, Wi-Fi channels are 20 to 22 MHz, 3G channels are 5 MHz, 4G channels are 1.4 to 20 MHz, DVB-T channels are 8 MHz, etc...). To be compatible with other standards, as for instance the Bluetooth™ standard where channels are 1 MHz wide, the chip rate of the PRN sequence can be modified when implementing the invention.

Figure 2e presents another embodiment of the invention, which is adapted to cases where the non-GNSS transmitter has the capability to modulate a bitstream in one of a BPSK or BOC modulation. In that case, the non-GNSS transmitter 241 generates a bitstream, made of the navigation message spread by the PRN code. This bitstream is used as an input of the non-GNSS modulator 242, which selects from either the non-GNSS or the GNSS-like signal (TDM). To be compliant with this embodiment, the non-GNSS modulator 242 must have the capability to take as an input, a bitstream having a sampling frequency related to the sampling frequency of the spreading sequence. In that case, only a firmware adaptation of the non-GNSS modulator is required to make the transmission equipment compatible with the invention. Advantageously, some time slots might be reserved in the non-GNSS frame, so that the interruption of the non-GNSS signal does not result in packets losses.

Figure 2f presents another embodiment according to the invention, very close to the embodiment of figure 2e. This embodiment is possible when the non-GNSS modulator offers the capability to spread a signal, as for instance in the DSSS mode (Direct Sequence Spread Spectrum) of the Wi-Fi 802.11 b and g standards. In that case, the GNSS-like signal source 251 generates and transmits a navigation message to the non-GNSS modulator 252, at the appropriate sampling frequency. The non-GNSS modulator is configured to modulate the navigation message modulated by the PRN sequence. The GNSS-like and non-GNSS signals are multiplexed in time. As in figure 2e, the non-GNSS signal frame can be modified to reserve time slots for the GNSS-like signal transmission so that no packets of the non-GNSS signal are lost. Thus, only firmware modifications of the transmitter are required to implement this embodiment of the invention. In that case, the communication channel used to transmit the GNSS-like signal is both a time and frequency resource of the non-GNSS resources.

In all the above examples, the multiplexing ratio between the GNSS-like and non-GNSS signal is the result of a compromise between the quality of service required for the positioning system and the decrease in quality of service that can be tolerated for the non-GNSS communication system. However, as the transmitters and receivers communicate over the non-GNSS communication network, the multiplexing can also be achieved "on demand". That way, the GNSS-like signals are only transmitted for a limited period of time, when requested. This provides a positioning capability that does not imply any decrease of the non-GNSS communication system quality of service when positioning information are not required.

Several access points offer dual or triple capability. In the example of Wi-Fi access points, a public and a private Wi-Fi network may be provided by the same equipment. These networks may be on the same frequency or not: 2.4 GHz or 5 GHz for example. It is also possible to use a specific channel. For example, channel 8, which has a frequency range of 2436 MHz to 2458 MHz. In another exemplary embodiment, Channel 14, which is not used in Europe or in America could be reserved to dedicated GNSS-like signals.

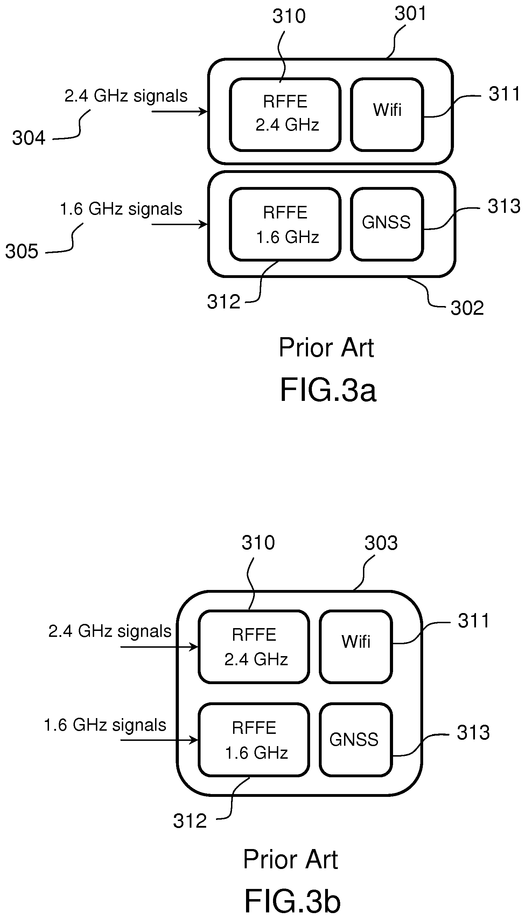

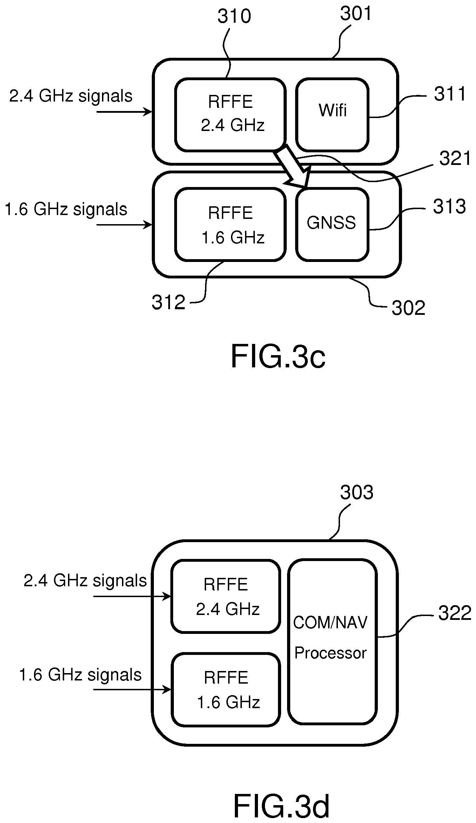

Figure 3a and 3b represent the overall architecture of a RF receiver according to prior art, while figures 3c to 3f represent various embodiments of a receiver according to the invention. In most of these embodiments, the invention advantageously reuses all or some of the modules/logics that already are implemented in standard receivers, in order to reduce as much as possible the hardware and software developments and costs required to implement the invention.

Today, most of the receivers can receive simultaneously signals transmitted using different communication standards and different carrier frequencies. The receiver represented in figure 3a is given as an example of a previous art receiver, for illustration purposes only. This receiver is designed to receive and exploit Wi-Fi signals (using the ISM band around 2.4 GHz), and GNSS signals (transmitted in L band around 1.6 GHz). To that end, it may comprise two independent chips or chipsets: one chipset 301 for Wi-Fi signals 304, and one chipset 302 for GNSS positioning signals 305. The receiver might have additional capabilities to communicate using various standards, as for instance 2G, 3G, 4G, Bluetooth™. In that case, it may contain more than two chipsets.

Each chipset comprises a Radio Frequency Front-End (RFFE) chain (310, 312), adapted to the carrier frequency of the signals received, for receiving and converting to baseband or intermediate frequency, respectively the Wi-Fi and the GNSS signals. Each chipset further comprises a calculation circuit (311, 313), dedicated to the processing of the Wi-Fi and GNSS signals. These circuits can be hardware circuits, software code implemented on any calculation device (processor, DSP, FPGA, ASIC or else), or a mix of hardware and software. For example, in a GNSS receiver, the circuit 313 may comprise the tracking loops for calculating pseudo ranges from the received positioning signals, and software algorithms for dealing with variations of the propagation environment (for instance multiple propagation paths mitigation, Doppler shift correction, etc...) and calculating the position of the receiver from multiple pseudo ranges.

Figure 3b represents another receiver as known from prior art, wherein both RFFE chains (310, 312) and calculation circuits (311, 313) are regrouped in a one chipset 303.

Figure 3c represents a first embodiment of a receiver according to the invention, when it comprises two distinct chipsets for processing GNSS and non-GNSS communication standards, and when the waveform of the GNSS-like signal is compliant with standard GNSS waveforms. To handle GNSS-like signals transmitted using a non-GNSS frequency, as for instance in the Wi-Fi frequency band, the receiver according to the invention comprises a bridge 321 that connects the output of the non-GNSS RFFE chain with the input of the GNSS calculation circuit. Thus, the baseband or intermediate frequency signal is conveyed to the standard GNSS calculation device, and is advantageously further processed as a standard GNSS signal.

Modifications that have to be done over existing equipments to comply with the invention consist in adding an extra output to the Wi-Fi chipset 301, an extra input to the GNSS chipset 302, a connection between said input/output and a logic to command these inputs/outputs. In terms of additional occupied space in the receiver and additional power consumption, the cost is close to zero.

When the receiver only comprises one chipset (as in figure 3b), the required modifications advantageously consist in adding a logic to the chipset for processing the signals received using the non-GNSS RFFE with the GNSS calculation circuit. This modification may be a firmware or software modification.

Figure 3d represents another embodiment of a receiver according to the invention, the receiver processing both the GNSS and non-GNSS signals using a common chipset. This embodiment operates when the waveform of the GNSS-like signal is compliant with standard GNSS waveforms. Transmissions received using the non-GNSS communication system and the GNSS positioning system are processed within a common calculation circuit 323. In that case, only modifications within the calculation circuit, likely to be software only modifications, are required to process GNSS-like signals received into the non-GNSS frequency band.

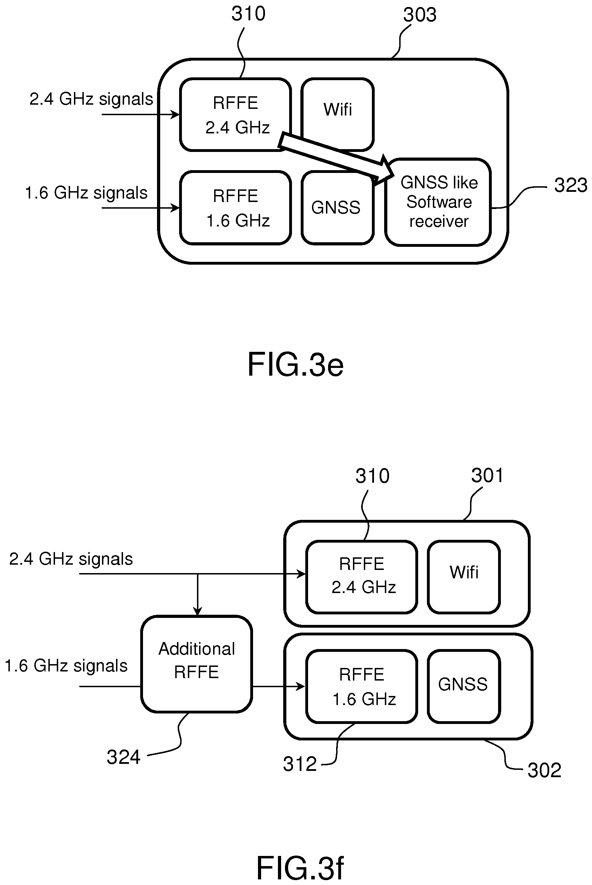

Figure 3e represents another embodiment of a receiver according to the invention, applying when the receiver comprises one or two chipsets to process the GNSS and non-GNSS signals. An additional calculation circuit 324 is added, to process the GNSS-like signals transmitted using the non-GNSS frequency band. This circuit takes as an input the output of the non-GNSS RFFE chain 310. This embodiment is particularly advantageous when the GNSS-like signals are not transmitted in the same frequency channel than the non-GNSS signal (frequency multiplexing). Indeed, at the output of the non-GNSS RFFE chain, the signal is not tuned at the exact carrier frequency, but this frequency shift residual is constant and known, and can be software processed. This embodiment is also advantageous when the waveform of the GNSS-like signal does not complies with standard GNSS waveforms.

Figure 3f represents another embodiment of a receiver according to the invention, which is applicable to the embodiments where the receiver comprises one or two chipsets to process the GNSS and non-GNSS signals, and when the waveform of the GNSS-like signal is compliant with standard GNSS waveforms. In this embodiment, the receiver does not require any modification as an additional RFFE chain 324 is added to transpose the received non-GNSS signal from its carrier frequency to the GNSS frequency (for instance, in figure 3f, from the Wi-Fi carrier frequency around 2.4 GHz to the GNSS carrier frequency around 1.6 GHz). The input of the GNSS RFFE chain 312 is fed with this signal, so that the GNSS-like signal can be further processed as a standard GNSS signal. This additional RFFE chain can be inserted in the receiver, or can take the form of an additional equipment to be plugged into the receiver. The RFFE chain can be implemented into the receiver, or be an external module that is plugged to the receiver.

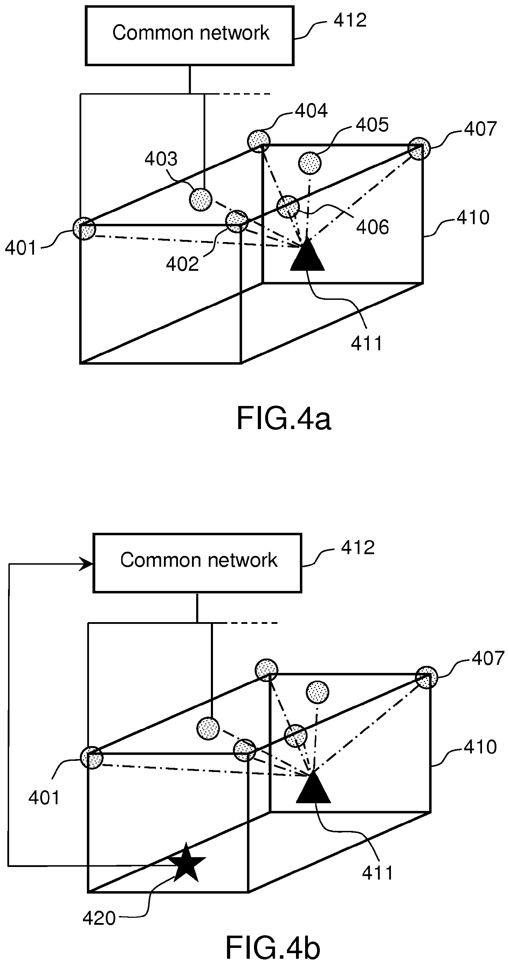

Figures 4a to 4d represent various embodiments of a positioning system according to the invention.

The accuracy of a GNSS positioning system mainly relies on two criteria: the synchronization of the transmitters, and the coverage provided by the non-GNSS system.

Concerning the coverage, the invention takes advantage of existing network architectures. As the GNSS receiver must receive at least four GNSS-like signals to calculate its position, each location of an area of interest must be covered by at least four GNSS-like signal transmitters using a same carrier frequency. The number of GNSS-like signals can be lower than four if some of the uncertainties of the positioning are retrieved from other equipments using dedicated signals or sensors, as for instance a clock or an altimeter. Conversely, when the number of GNSS-like signals and additional equipments is lower than four, a partial position velocity and time can still be determined: a low accuracy time determination can be performed based on one signal GNSS-like signal, the accuracy of this determination increasing along with the number of GNSS-like signals received.

As GNSS-like signals are spread, they can be retrieved and demodulated at the receiver's side even at low or very low carrier-to-noise ratios, a property that non-GNSS signals don't necessary have. Thus, the coverage of the non-GNSS network transmitting a GNSS-like signal has to be evaluated considering a GNSS-like signal link budget in line with the previously mentioned properties. A receiver in view of only one access point considering the non-GNSS communication system might then be in view of more access points when considering the GNSS-like communication system.

Figure 4a shows an embodiment of a positioning system according to the invention, wherein a plurality of non-GNSS transmitters 401 to 407, (for instance Wi-Fi transmitters), are disposed in a room 410 and configured to broadcast a GNSS-like positioning message. Room 410 may be a warehouse, a shop, a shopping mall, a building, a car park, a tunnel, a boat, a plane, or any other indoor environment, in which at least one receiver 411 is looking for positioning information.

Figure 4a is an illustration of this embodiment, and should not be interpreted restrictively, as the room 410 may be one or more facilities, and the transmitters may be situated outside of the facilities, for instance when the invention is implemented using resources of a 3G communication network. In an urban environment, it is indeed common to be nearby several base stations. Due to their proximity and transmitted power level, the received power level of a GNSS-like signal transmitted from such a base station would be higher than the received power level of a GNSS signal transmitted from a satellite. Moreover, such stations do present the advantage of being already synchronised. Thus, a cell phone operator may advantageously consider allocating some of its resources to the transmission of a positioning signal according to the invention.

Concerning the accuracy of the transmitters, in order to offer the best possible accuracy, the same navigation message must be transmitted at the exact same time by the different non-GNSS transmitters. To this end, the satellites of standard GNSS network embed atomic clocks. The cost of such equipments is such that this solution cannot be considered at a scale that requires a huge number of equipments.

Thus, in a first embodiment of a positioning system according to the invention, the access points can be connected to a common clock 412, delivering a time information used as a reference to transmit the positioning messages. This connection can be for instance an Ethernet link on a coaxial cable, a twisted-pair cable, an optical fibber, a power-line communication (PLC), a wireless connection, or any other suitable mean. In this embodiment, the clock does not have to reach a high level of stability performance, as each transmitter is synchronized in an open loop on the reference clock. Indeed, if the clock shifts, all the receivers will follow the clock shift, without any consequence on the positioning accuracy. Advantageously, when the common clock and the transmitters are linked by cables, the electrical length of the cables may be similar, or their transmission delay calibrated.

This solution requires a precise initial calibration of the non-GNSS network. However, the transmitters' synchronization can be achieved by taking advantage of the fact that the prime use of the access points is to provide an access to a common network 412. This network can be used to synchronize the equipments with each other. The common network can be the internet network, a local network, or the communication network itself. The synchronization can be achieved considering for instance a synchronisation mechanism like the NTP protocol (acronym for Network Time Protocol).

In addition to calculating a pseudo range, the receiver has to know the position of the various transmitters to determine its position relative to the positions of the transmitters. This determination is done according to techniques known from the person skilled in the art, based on triangulation. The transmitters' positions can be contained in the navigation messages of the GNSS-like signals, or transmitted through the non-GNSS network. In the latter case, the ephemeris information of the GNSS-like signal does not have to be complete, and this field may be suppressed or replaced by other data or padding. The accuracy of the final positioning indeed relies on the accuracy of the transmitters' positions.

These transmitters' positions can be recorded using a global coordinate system, such as the ECEF coordinates (acronym for Earth-Centered, Earth-Fixed), or using local coordinates, i.e. referred to a reference point in the building. When the transmitters' positions are recorded using a global coordinate system, the receiver can determine its position in this global coordinate success from its position relative to the positions of the transmitters. When the transmitters' positions are local coordinates, if the ECEF coordinates of the reference point are known from the receiver, both local and ECEF coordinates are immediately advantageously available to the receiver.

Figure 4b presents another embodiment of a positioning system according to the invention, in which one or more reference receivers 420 are located at known positions in the room 410. During an initial calibration phase, or regularly, and for each of the transmitters, these reference receivers calculate a pseudo range from the GNSS-like signal, and a residual, i.e. a difference between the expected pseudo range (calculated using the position of the transmitter and the position of the reference receiver) and the observed pseudo range measurement. A delay, relative to a shift that may be applied to the transmitter so it is synchronised with the others, can be calculated from this residual measurement. This delay is broadcast over the common non-GNSS network, so that either the transmitter adapts its transmission time, or the receivers take the delay into account when calculating the pseudo ranges. The first case is only possible when the transmitters can adapt their transmission time, while in the second case, the receivers must be capable of adjusting the calculated pseudo range based on the delays received, which means that the GNSS signal processing algorithms may slightly differ from classical algorithms.

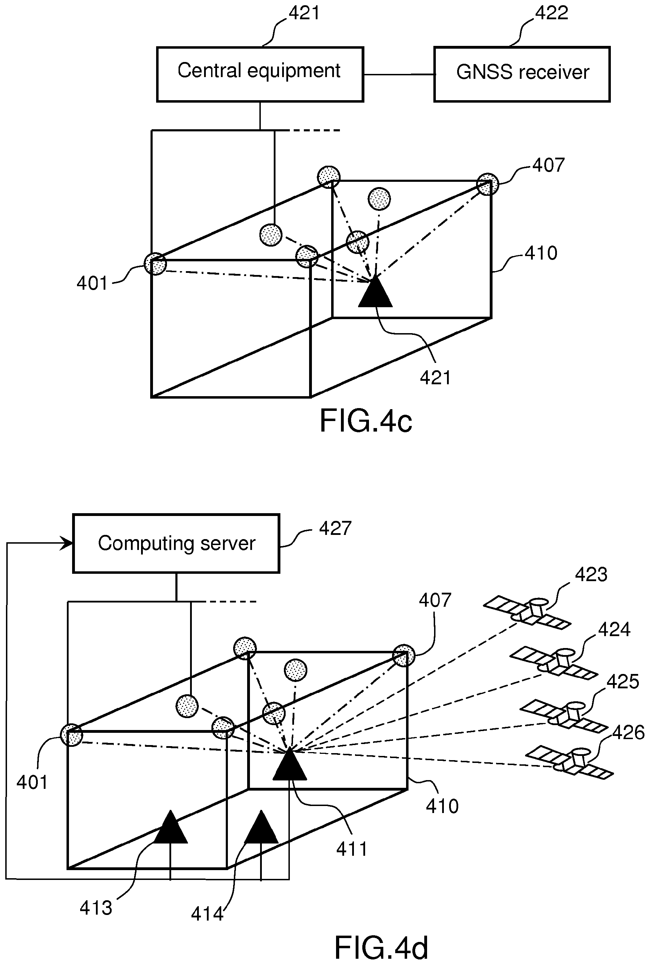

Figure 4c presents another embodiment of a positioning system according to the invention. In this embodiment, the transmitters 401 to 407 are connected to one or more central equipments 421, the central equipment having GNSS positioning signal reception capabilities 422. The central equipment can be any equipment having the capability to receive and demodulate a GNSS signal, retrieve the navigation message and transmit it to all the transmitters using the non-GNSS communication network. This central equipment can be one or more of the access points (401 to 407) having an outdoor antenna.

The position of the various transmitters and the information concerning the position of the satellites in the GNSS communication system (given by the ephemeris and almanac fields of the GNSS navigation message) are communicated to the receiver via the navigation message of the GNSS-like message or the non-GNSS network.

This embodiment is particularly suited for mixed indoor/outdoor operations, or urban canyons, where lack of clear sky and attenuated signals are an issue for a quick GNSS positioning. As the receiver already has information about the satellites positions, acquisition of the GNSS signal can be performed very quickly when the receiver moves from indoor to outdoor environment. A typical case of operation is a car going out of an indoor parking lot or a tunnel. Instead of waiting tens of seconds for the GNSS receiver to acquire the ephemeris and compute its position, deploying a positioning system according to the invention in a parking lot contributes to fasten the acquisition of the GNSS system satellites and provides an almost instantaneous positioning.

Such fast acquisition of a GNSS signal is further improved when the transmitters of the GNSS-like signal are synchronised over a time information given by the GNSS receiver.

When operating in an environment as described in figure 4c, where the ephemeris and transmission time are synchronized with a GNSS communication network, the receiver according to the invention can use signals transmitted in both the GNSS network and the non-GNSS network. This embodiment is particularly relevant when the receiver operates in an urban environment, and is not in view of enough satellites to accurately calculate its position. The receiver can then use the GNSS-like signals as a complement of the GNSS signals and make a selection or weighted combination of the GNSS-like and GNSS signals to determine a position. A selection of the signal could be based on a received power level, the origin of the signal, a carrier over noise ratio, a User Equivalent Range Error value (UERE) or any other relevant information.

Figure 4d represents another embodiment of the invention, wherein the receivers 411, 413 and 414 have a precise knowledge of the time and/or their position. These receivers can either be reference receivers, for instance receiver 413, receivers having a precise clock, for instance receiver 414, receivers acquiring the time and position information from any GNSS geolocation systems, for instance receiver 411, or a combination of such receivers. In the example of figure 4d, receiver 411 calculates its position from GNSS positioning signals transmitted by satellites 423 to 426. In this embodiment, the time information and/or position information of these receivers is considered as reference time/position information. Each of the receivers calculates a residual measurement from the GNSS-like signals acquired and their reference information, and transmits said residual to a computing server 427. As previously indicated, a residual is a difference between an expected pseudo range (calculated using the reference information available at the receiver) and a pseudo range computed from the GNSS-like signals.

Computing server 427 determines, with regard to a common time reference, a timing error for each of the GNSS-like transmitters 401 to 407, based on a weighted average of the residuals (crowdsourcing). The weighting factors can be related to the accuracy of the reference measurement. In an open area, reference information retrieved from a GNSS system might be favored with respect to reference information acquired from any opportunity signal, while the balance might be reversed in an indoor environment.

The timing errors estimated by the computing server are broadcast over the non-GNSS network, so that either the transmitters adapt their transmission time or the receivers take this information into account when performing the PVT calculation.

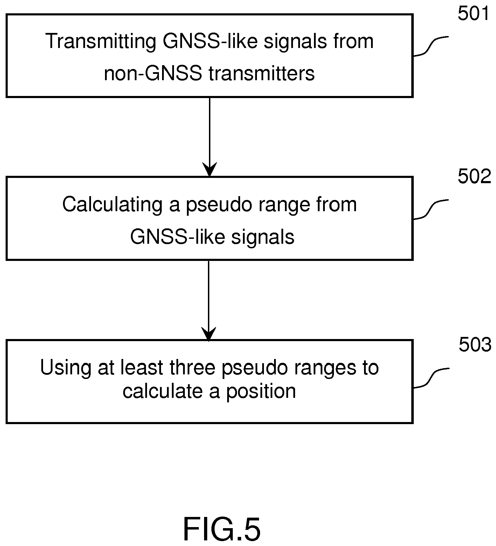

The invention further comprises a method for deploying and using a positioning system in an area that is not covered by a GNSS network, or as a complement to a GNSS system, and for determining a position in such an area. The method, represented in figure 5, uses non-GNSS transmitters as described in figures 2a to 2f and non-GNSS receivers as described in figures 3a to 3f.

It comprises a first step 501 of transmitting a GNSS-like signal using the non-GNSS access point, using to that end all or part of the resources originally allocated to this equipment for the non-GNSS communications.

To be self-sufficient, the network may contain at least four access points, but when deployed as a backup or relay of a GNSS positioning network, or when combined with position information retrieved from other equipment based on specific signals and/or sensors, the localization system can comprise down to one transmitter.

The non-GNSS and GNSS-like signals can be transmitted using a time division multiplexing technique, a frequency division multiplexing technique, or alternatively being transmitted both at the same time on a same frequency, the GNSS-like signal taking then advantage of the spreading, to ensure its good reception.

The method comprises a step 502 of receiving said GNSS-like signal in a receiver configured to process both GNSS and non-GNSS signals. The transmitters are identified by their spreading code. The positions of the various transmitters are transmitted through the navigation message of the GNSS-like messages, or through the non-GNSS resources. The receiver processes the GNSS-like signals using the non-GNSS radio chain and the GNSS calculation circuit (tracking loops and signal processing algorithms) or a dedicated calculation circuit, and uses the time of arrival of the GNSS-like signal to determine a pseudo range. Alternatively, the GNSS radio chain of the receiver can be fed with the non-GNSS signal, after transposing it to the GNSS frequency.

Finally, the method comprises a step 503 of using at least four pseudo ranges originating from the GNSS-like network, or combined with pseudo ranges determined from GNSS signals when the network is synchronized with the GNSS network, to calculate a position, velocity and time. Alternatively, the number of pseudo ranges required can be lower when some of the uncertainties concerning the position and time are given by other signals/sensors. One or more pseudo range determined from GNSS-like signals according to the invention may be combined with other signals or sensors measurements to calculate position, velocity and time.

The invention offers multiple advantages, among which, notably:
- The positioning network according to the invention may quickly and easily be deployed, at low cost as only minimal hardware or software modifications of existing transmission equipment are to be done, and do not require developing and installing dedicated access points,
- The positioning network according to the invention may come as a relay to a GNSS positioning network, to provide indoor positioning capabilities and provide fast indoor/outdoor transitions,
- The positioning network according to the invention is compatible with a wide range of communication standards, provided that they offer a bandwidth wide enough to transmit the main lobe of the modulation (at least 2 MHz),
- The positioning network according to the invention optionally offers "on demand" localization, where the positioning signal is only transmitted when requested from a receiver,
- The positioning network according to the invention provides the capability to encrypt the PRN code and/or navigation message, so that the service can be restrained to authorized users only, for dedicated purposes, such as in commercial or military domains,
- The positioning network according to the invention uses transmitters that are close to the receiver, which provide an intrinsic robustness to spoofing and jamming and ease the maintenance,
- The positioning method according to the invention only requires small modifications to be done to existing receivers, and do not require developing new equipments, or inserting additional space and power consuming calculation circuits (such as radio chains, hardware and software processing) into existing equipments,
- The positioning method according to the invention can be deployed using carrier frequencies with no stringent regulations, such as, for instance, the ISM band (used by Wi-Fi).

Although the various embodiments have been detailed in the case of a positioning system using Wi-Fi access points to transmit a GNSS-like signal, it should be noted that the invention can also be applied to various communication standards provided that they offer a sufficient bandwidth and a sufficient range to ensure appropriate coverage. The invention is particularly relevant as a low-cost solution for indoor positioning when used with a Wi-Fi signal, as it profits from the transmission power level and the wide deployment of access points, but it can also benefit from the high transmission power level and synchronization properties of networks like 3G, 4G or DVB-T, that give it the capability to cross the walls and penetrate the buildings, or from the multitude of potential transmitters using technologies like Bluetooth™. The application of the invention in such communication systems may be based on the generalization of the devices and process provided in this application. Further, one skilled in the art could easily use more than one non-GNSS communication networks to transmit the GNSS-like signals.

While embodiments of the invention have been illustrated by a description of various examples, and while these embodiments have been described in considerable details, it is not the intent of the applicant to restrict or in any way limit the scope of the invention that is defined by the claims.

## Claims

1. An access point for transmitting non-GNSS signals (203) using a wireless RF communication standard, the access point being further configured to transmit GNSS-like signals (213) comprising a navigation message (101) modulated by a pseudo-random code (102) in at least one communication channel dedicated to the transmission of the non-GNSS signals over a carrier frequency that differs from standard GNSS carrier frequencies, wherein the GNSS-like signals and non-GNSS signals are multiplexed using one of a time or a frequency division multiplexing technique.

2. The access point of claim 1, wherein the wireless RF communication standard is selected among the Wi-Fi, Bluetooth™, 3G, 4G and 5G standards.

3. The access point of one of claims 1 to 2, further comprising a calculation circuit for generating GNSS-like signals (211, 212, 213), and a combiner (214) for combining GNSS-like signals and non-GNSS signals into a same signal.

4. The access point of one of claims 1 to 2, further comprising a calculation circuit (212, 241, 251) for generating a bitstream representative of a GNSS-like signal.

5. The access point of one of the previous claims, the access point being further configured to transmit said GNSS-like signals when receiving a demand over a non-GNSS network.

6. The access point of one of the previous claims, further configured to retrieve a navigation message from a GNSS signal, and to transmit said navigation message to other access points using one among the GNSS-like signals and the non-GNSS signals.

7. An access point infrastructure for implementing a method for determining a position over an area (410) using GNSS-like signals transmitted by at least one non-GNSS access point, the access point infrastructure comprising at least one access point (401 to 407) according to one of claims 1 to 6, disposed so that at least one GNSS-like signal can be received at any location of the area.

8. An access point infrastructure according to claim 7, wherein the access points are synchronized over a common time reference (412).

9. A receiver configured for receiving GNSS and non-GNSS wireless signals multiplexed using one of a time or a frequency division multiplexing technique, the receiver being further configured to receive at least one GNSS-like signal comprising a navigation message (101) modulated by a pseudo-random code (102) in a communication channel dedicated to said non-GNSS wireless signal over a carrier frequency that differs from standard GNSS carrier frequencies, and to use said GNSS-like signal to determine a position of the receiver relative to a position of the access points.

10. The receiver of claim 9, wherein the position of the receiver is determined using at least four of said GNSS-like signals.

11. The receiver of claim 9, wherein the position of the receiver is determined using said at least one GNSS-like signal and information retrieved from other equipments.

12. The receiver of one of claims 9 to 11, further comprising a front-end module (312) and a calculation circuit (313) for receiving and processing GNSS signals, further comprising a front-end module (310) and a calculation circuit (311) for receiving and processing non-GNSS signals, the receiver being configured to receive the at least one GNSS-like signal using the non-GNSS front-end module (310).

13. The receiver of claim 12, wherein the receiver is configured to process the at least one GNSS-like signal using the GNSS calculation circuit (313).

14. A positioning system, for determining a position from a GNSS-like signal transmitted using a plurality of non-GNSS access points (401 to 407), the positioning system comprising:
• an access point infrastructure according to one of claims 7 to 8, and
• at least one receiver (411) according to one of claims 9 to 11.

15. The positioning system of claim 14, wherein at least one receiver (411) is configured to calculate pseudo range residuals from pseudo ranges measurements acquired from GNSS-like signals and a reference information, and to transmit said pseudo range residuals to a computing server (427) in charge of calculating a delay relative to the access points, and of transmitting said delay using the non-GNSS signals.

16. A method for deploying a positioning system comprising at least one access point configured to transmit non-GNSS signals using a wireless RF communication standard, and at least one receiver configured for receiving GNSS and non-GNSS wireless signals, the method comprising:
• a first step (501) of transmitting GNSS-like signals comprising a navigation message (101) modulated by a pseudo-random code (102) from at least one of said non-GNSS access points in at least one communication channel dedicated to the transmission of the non-GNSS signals over a carrier frequency that differs from standard GNSS carrier frequencies, the GNSS-like signals and non-GNSS signals being multiplexed using one of a time or a frequency division multiplexing technique
• a second step (502) of receiving said GNSS-like signals by said receiver, in at least one communication channel dedicated to the transmission of said non-GNSS signals over a carrier frequency that differs from standard GNSS carrier frequencies, and determining associated pseudo range measurements,
• a third step (503) of using said pseudo range measurements to calculate a position relative to a position of the access points.

## Patentansprüche

1. Zugangspunkt zum Übertragen von Nicht-GNSS-Signalen (203) unter Verwendung eines drahtlosen HF-Kommunikationsstandards, wobei der Zugangspunkt ferner konfiguriert ist, um GNSS-ähnliche Signale (213) zu übertragen, umfassend eine durch einen Pseudozufallscode (102) modulierte Navigationsnachricht (101), in mindestens einem zur Übertragung der Nicht-GNSS-Signale vorgesehenen Kommunikationskanal über eine Trägerfrequenz, die von standardmäßigen GNSS-Trägerfrequenzen verschieden ist, wobei die GNSS-ähnlichen Signale und die Nicht-GNSS-Signale unter Verwendung eines einer Zeit- oder Frequenz-Multiplexingtechnik gemultiplext werden.

2. Zugangspunkt nach Anspruch 1, wobei der drahtlose HF-Kommunikationsstandard aus den Standards Wi-Fi, Bluetooth™, 3G, 4G und 5G ausgewählt ist.

3. Zugangspunkt nach einem der Ansprüche 1 bis 2, ferner umfassend eine Berechnungsschaltung zum Erzeugen von GNSS-ähnlichen Signalen (211, 212, 213) und einen Kombinierer (214) zum Kombinieren von GNSS-ähnlichen Signalen und Nicht-GNSS-Signalen in einem selben Signal.

4. Zugangspunkt nach einem der Ansprüche 1 bis 2, ferner umfassend eine Berechnungsschaltung (212, 241, 251) zum Erzeugen eines Bitstroms, der ein GNSS-ähnliches Signal repräsentiert.

5. Zugangspunkt nach einem der vorstehenden Ansprüche, wobei der Zugangspunkt ferner konfiguriert ist, um die GNSS-ähnlichen Signale zu übertragen, wenn er eine Anforderung über ein Nicht-GNSS-Netzwerk empfängt.

6. Zugangspunkt nach einem der vorstehenden Ansprüche, ferner konfiguriert zum Abrufen einer Navigationsnachricht von einem GNSS-Signal und zum Übertragen der Navigationsnachricht an andere Zugangspunkte unter Verwendung eines unter den GNSS-ähnlichen Signalen und den Nicht-GNSS-Signalen.

7. Zugangspunktinfrastruktur zum Implementieren eines Verfahrens zum Bestimmen einer Position über einem Gebiet (410) unter Verwendung von GNSS-ähnlichen Signalen, die durch mindestens einen Nicht-GNSS-Zugangspunkt übertragen wurden, die Zugangspunktinfrastruktur umfassend mindestens einen Zugangspunkt (401 bis 407) nach einem der Ansprüche 1 bis 6, derart angeordnet, dass mindestens ein GNSS-ähnliches Signal an jedem Ort des Gebiets empfangen werden kann.

8. Zugangspunktinfrastruktur nach Anspruch 7, wobei die Zugangspunkte über eine gemeinsame Zeitreferenz (412) synchronisiert werden.

9. Empfänger, konfiguriert zum Empfangen von drahtlosen GNSS- und Nicht-GNSS-Signalen, gemultiplext unter Verwendung eines einer Zeit- oder Frequenz-Multiplexingtechnik, wobei der Empfänger ferner konfiguriert ist, um mindestens ein GNSS-ähnliches Signal zu empfangen, umfassend eine durch einen Pseudozufallscode (102) modulierte Navigationsnachricht (101), in einem für das drahtlose Nicht-GNSS-Signal vorgesehenen Kommunikationskanal über eine Trägerfrequenz, die von standardmäßigen GNSS-Trägerfrequenzen verschieden ist, und zum Verwenden des GNSS-ähnlichen Signals zum Bestimmen einer Position des Empfängers relativ zu einer Position der Zugangspunkte.

10. Empfänger nach Anspruch 9, wobei die Position des Empfängers unter Verwendung von mindestens vier der GNSS-ähnlichen Signale bestimmt wird.

11. Empfänger nach Anspruch 9, wobei die Position des Empfängers unter Verwendung des mindestens einen GNSS-ähnlichen Signals und der von anderen Ausrüstungen abgerufenen Informationen bestimmt wird.

12. Empfänger nach einem der Ansprüche 9 bis 11, ferner umfassend ein vorgeschaltetes Modul (312) und eine Berechnungsschaltung (313) zum Empfangen und Verarbeiten von GNSS-Signalen, ferner umfassend ein vorgeschaltetes Modul (310) und eine Berechnungsschaltung (311) zum Empfangen und Berechnen von Nicht-GNSS-Signalen, wobei der Empfänger konfiguriert ist, um das mindestens eine GNSS-ähnliche Signal unter Verwendung des vorgeschalteten Nicht-GNSS-Moduls (310) zu empfangen.

13. Empfänger nach Anspruch 12, wobei der Empfänger konfiguriert ist, um das mindestens eine GNSS-ähnliche Signal unter Verwendung der GNSS-Berechnungsschaltung (313) zu verarbeiten.

14. Positionierungssystem zum Bestimmen einer Position aus einem GNSS-ähnlichen Signal, das unter Verwendung einer Vielzahl von Nicht-GNSS-Zugangspunkten (401 bis 407) übertragen wurde, das Positionierungssystem umfassend:
• eine Zugangspunktinfrastruktur nach einem der Ansprüche 7 bis 8 und
• mindestens einen Empfänger (411) nach einem der Ansprüche 9 bis 11.

15. Positionierungssystem nach Anspruch 14, wobei mindestens ein Empfänger (411) konfiguriert ist, um Pseudobereichsreste aus Pseudobereichsmessungen, die aus GNSS-ähnlichen Signalen und einer Referenzinformation erfasst wurden, zu berechnen und die Pseudobereichsreste an einen Berechnungsserver (427), der zum Berechnen einer Verzögerung relativ zu den Zugangspunkten und zum Übertragen der Verzögerung unter Verwendung der Nicht-GNSS-Signale zuständig ist, zu übertragen.

16. Verfahren zum Einsetzen eines Positionierungssystems, umfassend mindestens einen Zugangspunkt, der konfiguriert ist, um Nicht-GNSS-Signale unter Verwendung eines drahtlosen HF-Kommunikationsstandards zu übertragen, und mindestens einen Empfänger, der konfiguriert ist, um drahtlose GNSS- und Nicht-GNSS-Signale zu empfangen, das Verfahren umfassend:
• einen ersten Schritt (501) des Übertragens von GNSS-ähnlichen Signalen, umfassend eine durch einen Pseudozufallscode (102) modulierte Navigationsnachricht (101) von mindestens einem der Nicht-GNSS-Zugangspunkte in mindestens einem zur Übertragung der Nicht-GNSS-Signale vorgesehenen Kommunikationskanal über eine Trägerfrequenz, die von standardmäßigen GNSS-Trägerfrequenzen verschieden ist, wobei die GNSS-ähnlichen Signale und Nicht-GNSS-Signale unter Verwendung einer einer Zeit- oder einer Frequenz-Multiplexingtechnik gemultiplext werden,
• einen zweiten Schritt (502) des Empfangens der GNSS-ähnlichen Signale durch den Empfänger in mindestens einem zur Übertragung der Nicht-GNSS-Signale vorgesehenen Kommunikationskanal über eine Trägerfrequenz, die von standardmäßigen GNSS-Trägerfrequenzen verschieden ist, und des Bestimmens assoziierter Pseudobereichsmessungen,
• einen dritten Schritt (503) des Verwendens der Pseudobereichsmessungen zum Berechnen einer Position relativ zu einer Position der Zugangspunkte.

## Revendications

1. Point d'accès pour transmettre des signaux non-GNSS (203) en utilisant une norme de communication RF sans fil, le point d'accès étant en outre configuré pour transmettre des signaux de type GNSS (213) comprenant un message de navigation (101) modulé par un code pseudo-aléatoire (102) dans au moins un canal de communication dédié à la transmission des signaux non-GNSS sur une fréquence porteuse qui diffère des fréquences porteuses GNSS standard, dans lequel les signaux de type GNSS et les signaux non-GNSS sont multiplexés en utilisant l'une parmi une technique de multiplexage par répartition dans le temps et une technique de multiplexage par répartition en fréquence.

2. Point d'accès selon la revendication 1, dans lequel la norme de communication RF sans fil est sélectionnée parmi les normes Wi-Fi, Bluetooth™, 3G, 4G et 5G.

3. Point d'accès selon l'une quelconque des revendications 1 à 2, comprenant en outre un circuit de calcul pour générer des signaux de type GNSS (211, 212, 213), et un combineur (214) pour combiner des signaux de type GNSS et des signaux non-GNSS en un même signal.

4. Point d'accès selon l'une quelconque des revendications 1 à 2, comprenant en outre un circuit de calcul (212, 241, 251) pour générer un flux binaire représentatif d'un signal de type GNSS.

5. Point d'accès selon l'une quelconque des revendications précédentes, le point d'accès étant en outre configuré pour transmettre lesdits signaux de type GNSS lors de la réception d'une demande sur un réseau non-GNSS.

6. Point d'accès selon l'une quelconque des revendications précédentes, configuré en outre pour récupérer un message de navigation à partir d'un signal GNSS, et transmettre ledit message de navigation à d'autres points d'accès en utilisant l'un parmi les signaux de type GNSS et les signaux non-GNSS.

7. Infrastructure de points d'accès pour mettre en œuvre un procédé pour déterminer une position sur une zone (410) en utilisant des signaux de type GNSS transmis par au moins un point d'accès non-GNSS, l'infrastructure de points d'accès comprenant au moins un point d'accès (401 à 407) selon l'une quelconque des revendications 1 à 6, disposé de sorte qu'au moins un signal de type GNSS peut être reçu en un quelconque emplacement de la zone.

8. Infrastructure de points d'accès selon la revendication 7, dans laquelle les points d'accès sont synchronisés sur une référence temporelle commune (412).

9. Récepteur configuré pour recevoir des signaux sans fil GNSS et non-GNSS multiplexés en utilisant une technique parmi une technique de multiplexage par répartition dans le temps et une technique de multiplexage par répartition en fréquence, le récepteur étant en outre configuré pour recevoir au moins un signal de type GNSS comprenant un message de navigation (101) modulé par un code pseudo-aléatoire (102) dans un canal de communication dédié audit signal sans fil non-GNSS sur une fréquence porteuse qui diffère des fréquences porteuses GNSS standard, et à utiliser ledit signal de type GNSS en vue de déterminer une position du récepteur par rapport à une position des points d'accès.

10. Récepteur selon la revendication 9, dans lequel la position du récepteur est déterminée en utilisant au moins quatre desdits signaux de type GNSS.

11. Récepteur selon la revendication 9, dans lequel la position du récepteur est déterminée en utilisant ledit au moins un signal de type GNSS et des informations récupérées à partir d'autres équipements.

12. Récepteur selon l'une quelconque des revendications 9 à 11, comprenant en outre un module frontal (312) et un circuit de calcul (313) pour recevoir et traiter des signaux GNSS, comprenant en outre un module frontal (310) et un circuit de calcul (311) pour recevoir et traiter des signaux non-GNSS, le récepteur étant configuré pour recevoir ledit au moins un signal de type GNSS en utilisant le module frontal non-GNSS (310).

13. Récepteur selon la revendication 12, dans lequel le récepteur est configuré pour traiter ledit au moins un signal de type GNSS en utilisant le circuit de calcul GNSS (313).

14. Système de positionnement, pour déterminer une position à partir d'un signal de type GNSS transmis en utilisant une pluralité de points d'accès non-GNSS (401 à 407), le système de positionnement comprenant :
• une infrastructure de points d'accès selon l'une quelconque des revendications 7 à 8 ; et
• au moins un récepteur (411) selon l'une quelconque des revendications 9 à 11.

15. Système de positionnement selon la revendication 14, dans lequel au moins un récepteur (411) est configuré pour calculer des valeurs résiduelles de pseudo-distance à partir de mesures de pseudo-distances acquises à partir de signaux de type GNSS et d'informations de référence, et transmettre lesdites valeurs résiduelles de pseudo-distance à un serveur de calcul (427) chargé de calculer un retard par rapport aux points d'accès, et de transmettre ledit retard en utilisant les signaux non-GNSS.

16. Procédé de déploiement d'un système de positionnement comprenant au moins un point d'accès configuré pour transmettre des signaux non-GNSS en utilisant une norme de communication RF sans fil, et au moins un récepteur configuré pour recevoir des signaux sans fil GNSS et non-GNSS, le procédé comprenant :
• une première étape (501) consistant à transmettre des signaux de type GNSS comprenant un message de navigation (101) modulé par un code pseudo-aléatoire (102), à partir d'au moins l'un desdits points d'accès non-GNSS, dans au moins un canal de communication dédié à la transmission des signaux non-GNSS, sur une fréquence porteuse qui diffère des fréquences porteuses GNSS standard, les signaux de type GNSS et les signaux non-GNSS étant multiplexés en utilisant l'une parmi une technique de multiplexage par répartition dans le temps et une technique de multiplexage par répartition en fréquence ;
• une deuxième étape (502) consistant à recevoir lesdits signaux de type GNSS, par le biais dudit récepteur, dans au moins un canal de communication dédié à la transmission desdits signaux non-GNSS, sur une fréquence porteuse qui diffère des fréquences porteuses GNSS standard, et à déterminer des mesures de pseudo-distances associées ;
• une troisième étape (503) consistant à utiliser lesdites mesures de pseudo-distances en vue de calculer une position par rapport à une position des points d'accès.
